# EUROPÄISCHE PATENTSCHRIFT

(11) **EP 0 794 967 B1**
(45) Veröffentlichungstag und Bekanntmachung des Hinweises auf die Patenterteilung: **15.07.1998**
(21) Anmeldenummer: 95941011.9
(22) Anmeldetag: 24.11.1995
(51) Int. Cl.: C08F 2/24

(54) **VERFAHREN ZUR HERSTELLUNG VON EMULSIONSPOLYMERISATEN**
METHOD OF PRODUCING EMULSION POLYMERS
PROCEDE POUR FABRIQUER UN POLYMERISAT EN EMULSION

(30) Priorität: 30.11.1994 DE 4442577
(43) Veröffentlichungstag der Anmeldung: 17.09.1997
(73) Patentinhaber: Clariant GmbH, 65929 Frankfurt am Main (DE)
(72) Erfinder: HESSEL, Friedrich, D-55124 Mainz (DE); RINNO, Helmut, D-65179 Hofheim (DE); SCHARDT, Richard, D-65520 Bad Camberg (DE); ZIMMERSCHIED, Klaus, D-65205 Wiesbaden (DE)
(86) Internationale Anmeldenummer: EP9504636
(87) Internationale Veröffentlichungsnummer: WO9616992

(56) Entgegenhaltungen:
- AT-A- 382 629
- FR-A- 1 462 866

## Beschreibung

Die vorliegende Erfindung betrifft ein verbessertes Verfahren zur Herstellung von Emulsionpolymerisaten hydrophober Monomere im industriellen Maßstab.

Emulsionspolymerisationen hydrophober Monomere werden im industriellen Rahmen in der Regel durch Monomer-Dosierverfahren unter Zudosierung von Monomer/Monomergemischen oder einer Voremulsion eines oder mehrerer Monomerer oder seltener im Batchverfahren durchgeführt.

Beim Dosierverfahren kann die Polymerisation mit einem kleinen Teil der Monomere (Monomervorlage) gestartet werden, es kann aber auch so verfahren werden, daß zu Beginn der Polymerisation die Polymerisationsinitiatoren und die Monomere gleichzeitig dem Reaktor zugefügt werden. Überlicherweise wird beim Dosierverfahren die überwiegende Menge der Monomere im Verlauf der Polymerisation zudosiert.

Die jeweiligen Polymerisationsbedingungen sind abhängig von den verwendeten Monomeren, Initiatoren und den weiteren Hilfsstoffen. Die Polymerisationstemperaturen liegen üblicherweise im Bereich zwischen 40 und 90°C, die Reaktionen werden in der Regel unter Normaldruck durchgeführt, wenn keine unter Polymerisationsbedingungen gasförmigen Monomere, beispielsweise Ethen, Vinylchlorid verwendet werden.

Ein großes Problem für die Durchführung der Emulsionspolymerisation im industriellen Maßstab in Rührreaktoren mit üblicherweise mindestens 2 m³ Nutzvolumen stellt die Abfuhr der Polymerisationswärme dar. Die Polymerisationswärme, beispielsweise bei der Polymerisation von Methacrylsäuremethylester, liegt bei 55,5 kJ/mol beziehungsweise bei 555 kJ/kg. Die pro Zeiteinheit über eine äußere Kühlung (Mantelkühlung) abzuführende Wärmemenge ist durch die Zugabegeschwindigkeit der Monomere, die Rührbedingungen, die Temperaturdifferenz zwischen dem Reaktionsmedium und dem Kühlmedium, die rheologischen Eigenschaften der Dispersionen sowie das Verhältnis von Kesselinhalt zur Manteloberfläche beeinflußt. Dieses Verhältnis wird um so ungünstiger, je größer der Kesselinhalt ist. Besonders bei hochviskosen Systemen oder Systemen, die nicht rührstabil sind, ist ein Wärmeaustausch zwischen Dispersion und Wand und damit die Wärmeabfuhr über eine äußere Kühlung problematisch.

Die Temperaturdifferenz zwischen dem Reaktorinhalt und dem Kühlmedium kann zur Verbesserung der Wärmeabführung bei der Herstellung im technischen Maßstab nur in beschränktem Umfang erhöht werden, da die Verwendung von Kühlsole mit sehr tiefen Temperaturen unwirtschaftlich ist und die Gefahr einschließt, daß bei Temperaturen des Kühlmediums <O°C bei örtlich unvollkommener Durchmischung die wäßrige Dispersion an der Reaktorwand auffriert und dabei zerstört wird. Eine Erhöhung der Polymerisationstemperatur führt zu veränderten Dispersionseigenschaften.

Eine externe Kühlung über außenliegende Kühler unter Umpumpen während der Herstellung ist bei feinteiligen Dispersionen nur in Ausnahmefällen möglich, da der kolloidchemische Zustand während der Herstellung von Emulsionspolymerisaten durch die Scherbeanspruchung beim Umpumpen empfindlich gestört werden kann und insbesondere bei höherviskosen Dispersionen häufig zu Koagulatbildung, Wandbelag und/oder Stippenbildung führt.

Deshalb ist beim Scale-up vom Labor- über den Technikumsmaßstab in den industriellen Fertigungsmaßstab üblicherweise eine erheblich verlängerte Dosierzeit für die Monomere notwendig, die mehrere Nachteile bedingt. Sie führt je Polymerisationsansatz unmittelbar zu einer deutlichen Verlängerung der Belegzeit in den Polymerisationsanlagen. Lange Belegzeiten einer Polymerisationsanlage sind aus wirtschaftlichen Gründen ungünstig. Ein Prozeß zur Herstellung von Emulsionspolymerisaten im technischen Maßstab mit kurzen Kesselbelegzeiten, also mit hoher, von der Ansatzgröße weitgehend unabhängiger Zugabegeschwindigkeit der Monomere ist deshalb anzustreben. Dies muß unter Erhaltung der physikalischen und anwendungstechnischen Eigenschaften der Dispersion, unabhängig vom Reaktorvolumen, erfolgen.

Durch die bisher notwendige Verlängerung der Dosierzeit bei Vergrößerung des Herstellungsmaßstabs wird häufig das Molekulargewicht der erzeugten Emulsionspolymerisate bei Ansatzgrößen ab 2 m³ verändert. Dadurch werden beispielsweise anwendungstechnische Eigenschaften, die vom Molekulargewicht abhängen, wie das Pigmentbindevermögen, negativ beeinflußt. Unter den Bedingungen der technischen Produktion ist es jedoch besonders nachteilig, wenn die Reproduzierbarkeit der anwendungstechnischen Eigenschaften und damit die Qualitätssicherung von der Ansatzgröße abhängt, da dies den Einsatz rationell arbeitender Großanlagen stark behindert.

Zur Abfuhr der Polymerisationswärme wird in der Literatur neben der Mantelkühlung der Reaktoren und der Verwendung externer Wärmeaustauscher vorgeschlagen, bei Monomeren mit Siedepunkten im Bereich der üblichen Polymerisationstemperaturen die Polymerisationswärme durch Verdampfen und Kondensieren eines Teils des Monomeren während der Reaktion bei Normaldruck abzuführen. Diese Siedekühlung wird beispielsweise bei Vinylacetat als Monomer im technischen Maßstab verwendet. In der Literatur existieren auch Vorschläge, die Polymerisation bei anderen Monomeren unter reduziertem Druck durchzuführen und die Polymerisationswärme über einen Rückflußkühler abzuführen (DE-A 2 500 309).

In DD-A 145 401 wird ein Verfahren zur Herstellung von Polymerlatices und Polymerlösungen durch Lösungspolymerisation in Wasser beziehungsweise "umgekehrte" (Wasser in Öl) Emulsionspolymerisation nach dem Batch-Verfahren einer wäßrigen Monomerlösung in Gegenwart einer mit Wasser nicht mischbaren organischen Masse beschrieben. Die Polymerisation der in jedem Fall wasserlöslichen Monomere wird dabei unter reduziertem Druck durchgeführt.

In DE-A 3 522 419 wird ein Verfahren zur Herstellung von konzentrierten Emulsionspolymerisaten durch Polymerisation nach dem Batch-Verfahren wenigstens eines wasserlöslichen Monomeren in einer Wasser-/Öl-Dispersion beschrieben. Dabei wird die Polymerisationswärme durch destillative Entfernung von im Reaktionsgemisch enthaltenem Wasser abgeführt.

Im Derwent-Abstract Nr. 93/191 512 (Derwent Information LTD) sowie in FR-A 1 462 866 wird ein Herstellungsverfahren für Vinylester-Polymere durch Polymerisation bei niedrigen Temperaturen unter reduziertem Druck beschrieben. Dieses Verfahren ist brauchbar für die relativ hydrophilen Vinylester.

Aufgabe der vorliegenden Erfindung war daher, bei der Emulsionspolymerisation von hydrophoben Monomeren in Reaktoren von 2 bis 80 m³ Nutzvolumen eine einmal gewählte und für das Gesamtverfahren als günstig angesehene Reaktionstemperatur und Zudosierzeit der Monomere unabhängig vom Reaktorvolumen weitgehend konstant halten zu können und dabei die Bildung von Wandbelag, Stippen oder die nachteilige Beeinflussung der Teilchengröße oder Teilchengrößenverteilung zu vermeiden.

Die Aufgabe konnte gelöst werden durch Emulsionspolymerisation unter Zudosierung der Monomere mit einer Zugabegeschwindigkeit von 15 bis 60 Gew.-% der Gesamtmenge der zuzuführenden Monomere pro Stunde und Destillation eines Wasser-/Monomer-Gemisches unter reduziertem Druck und Rückführung des durch Kühlung kondensierten Wasser-/Monomer-Gemisches in den Polymerisationsansatz.

Gegenstand der vorliegenden Erfindung ist also ein Verfahren zur Herstellung von Emulsionspolymerisaten aus zumindest anteilig hydrophoben Monomeren in Rührreaktoren mit 2 bis 80 m³ Nutzvolumen nach dem Zudosierverfahren mit einer Zugabegeschwindigkeit der Monomere von 15 - 60 Gew.-% der Gesamtmenge der zuzuführenden Monomere pro Stunde durch Polymerisation und Destillation eines Wasser-/Monomer-Gemisches unter reduziertem Druck und Rückführung des durch Kühlung kondensierten Wasser-/Monomer-Gemisches.

Die erfindungsgemäße Emulsionspolymerisation wird in Reaktoren von 2 bis 80 m³, vorzugsweise 5 bis 50 m³, insbesondere 10 bis 30 m³ Nutzvolumen durchgeführt.

Die Reaktion wird in einem Temperaturbereich zwischen 55°C und 90°C, vorzugsweise in einem Bereich zwischen 70°C und 85°C, bei einem Druck zwischen 120 und 700 hPa, vorzugsweise zwischen 300 und 580 hPa, so durchgeführt, daß eine Menge Kondensat durch Rückflußkühlung gebildet wird, die ausreicht, um die bei der Polymerisation entstehende Wärme abzuführen. Die Wärmeabfuhr durch Siedekühlung liegt im Bereich von 10 bis 100 %, vorzugsweise von 30 bis 80 %, der insgesamt anfallenden Polymerisationswärme. Der Anteil der durch Siedekühlung abzuführenden Wärmemenge steigt bei gegebener Reaktionstemperatur und gegebener Dosierzeit der Monomeren mit steigender Ansatzgröße.

Die vollständige oder teilweise Abführung der Polymerisationswärme kann während der gesamten Polymerisation oder erst nach Polymerisation der Monomervorlage während der Monomerdosierzeit durch Siedekühlung erfolgen.

Das gebildete Kondensat, das aus einem Gemisch von Monomeren und Wasser besteht, liegt im allgemeinen in Form einer Mischung der Monomertröpfchen in Wasser vor. Das Kondensat enthält während der Monomerzudosierung neben Wasser, abhängig von der Natur der verwendeten Monomere, vorzugsweise 1 bis 60 Gew.-% Monomere, insbesondere 3 bis 30 Gew.-%, besonders bevorzugt 5 bis 20 Gew.-%. Gegen Ende der Polymerisation besteht das Kondensat praktisch nur noch aus Wasser.

Bei der Emulsionspolymerisation von in Wasser nicht oder nur sehr schlecht löslichen Monomeren, beispielsweise Styrol, Acrylsäureestern oder Methacrylsäureestern, besteht bei einer direkten Zudosierung von hydrophoben Monomeren während der Emulsionspolymerisation die Gefahr der Stippenbildung. Durch direkte Dosierung derartiger Monomere hergestellte Dispersionen sind deshalb häufig von geringer Qualität und wegen ihres hohen Siebrückstands für anspruchsvolle Anwendung, beispielsweise als Bindemittel in Farben, Lacken oder Lasuren wenig geeignet. Um dies zu verhindern, müssen die Monomere mit Hilfe von Emulgatoren in Wasser durch intensives Rühren in eine stabile Monomeremulsion überführt werden und in Form dieser Monomeremulsion dann während der Emulsionspolymerisation zudosiert werden. Wird nun bei der Herstellung von Styrol/(Meth)Acrylester oder (Meth)Acrylester-Copolymerdispersionen durch Reduzierung des Druckes die Verdampfung des Wassers bei Polymerisationstemperatur ausgelöst und damit eine Abführung der Polymerisationswärme durch Siedekühlung über einen Rückflußkühler ermöglicht, verdampfen gleichzeitig, bis zum vollständigen Verbrauch aller Monomere durch Polymerisation, die im Ansatz befindlichen Monomere entsprechend ihrem Partialdruck. Sie werden zusammen mit dem Wasser im Rückflußkühler kondensiert und fließen in Form kleiner, meistens jedoch grober Monomertropfen in den Ansatz zurück. Dies kann vor allem bei Emulgator-stabilisierten feinteiligen Dispersionen zu einem erhöhten Koagulat und/oder Stippenanteil führen. Außerdem kann die Teilchengrößenverteilung der entstehenden Latices unerwünscht beeinflußt werden.

Eine bevorzugte Ausführungsform des erfindungsgemäßen Verfahrens besteht daher darin, das Kondensat erst in den Ansatz zurückzuführen, nachdem es intensiv mit der Voremulsion der Monomere vermischt worden ist. Das Vermischen des vom Kühler ablaufenden Monomer-/Wasser-Kondensats mit der Monomer-Voremulsion erfolgt mittels diskontinuierlicher oder vorzugsweise kontinuierlicher Methoden zum Mischen von Flüssigkeiten, beispielsweise durch mechanisches Verrühren beider Flüssigkeiten, Injizieren der einen in die andere Flüssigkeit, vorzugsweise gemeinsame Passage beider Flüssigkeitsströme über eine ausreichend lange Mischstrecke, beispielsweise einen Statikmischer.

Das Mengenverhältnis von Kondensat zu Monomer-Voremulsion beträgt in der dem Polymerisationsansatz zugeführten Mischung vorzugsweise durchschnittlich 0,1 : 10 bis 1 : 1, insbesondere 0,1 : 5 bis 0,5 : 1.

Nach einer besonders bevorzugten Ausführungsform wird das erfindungsgemäße Verfahren während der Monomer-Zudosierung isotherm durchgeführt. Diese Verfahrensvariante ermöglicht einen minimalen Verbrauch an Energie zum Heizen beziehungsweise Kühlen.

Das erfindungsgemäße Verfahren kommt vorzugsweise zum Einsatz bei der Emulsionspolymerisation in Gegenwart von Radikalstartern zur Herstellung von Polymerdispersionen aus
A) 20 bis 80 Gew.-%, vorzugsweise 40 bis 60 Gew.-%, hartmachenden Monomeren aus der Gruppe Methylmethacrylat, Styrol und Vinyltoluol,
B) 20 bis 80 Gew.-%, vorzugsweise 40 bis 60 Gew.-%, weichmachenden Monomeren aus der Gruppe Acrylsäureester und Methacrylsäureester, die im Alkoholrest einen linearen oder verzweigten Alkylrest mit 2 bis 8 Kohlenstoffatomen tragen, insbesondere Ethylacrylat, Isopropylacrylat, n-Butylacrylat, tert.-Butylacrylat, Isobutylacrylat oder 2-Ethylhexylacrylat und die entsprechenden Ester der Methacrylsäure,
C) 0,1 bis 5 Gew.-%, vorzugsweise 1 bis 3 Gew.-%, Comonomeren aus der Gruppe Acrylsäure, Methacrylsäure, Acrylamid, Methacrylamid, N-Methylolacrylamid, N-Methylolmethacrylamid, Hydroxyethylacrylat, Hydroxyethylmethacrylat, Hydroxypropylacrylat, Hydroxyypropylmethacrylat,
D) 0 bis 20 Gew.-% weiteren mit den Monomeren A) - C) copolymerisierbaren Monomeren.

Zur erfindungsgemäßen Herstellung der Dispersionen werden vorzugsweise von bis zu 3 Gew.-%, insbesondere bis zu 2 Gew.-%, ionische Emulgatoren oder vorzugsweise bis zu 6 Gew.-%, insbesondere bis zu 4 Gew.-%, nichtionische Emulgatoren, jeweils bezogen auf den Gehalt an Polymerisat, oder auch Mischungen dieser Emulgatoren eingesetzt.

Die Emulgatoren können zum Teil vorgelegt werden, zum Teil während der Dosierung mit den Monomeren, zum Teil über die Monomeremulsion dem Polymerisationsansatz zugeführt werden. Erfindungsgemäß werden vorzugsweise 3 bis 98 Gew.-%, insbesondere 30 bis 95 Gew.-%, der Emulgatormenge während der Polymerisation, beispielsweise zusammen mit den Monomeren über die Monomeremulsion eingesetzt.

Als nichtionische Emulgatoren verwendet man beispielsweise Alkylpolyglykolether wie die Ethoxylierungsprodukte von Lauryl-, Oleyl- oder Stearylalkohol oder von Gemischen wie Kokosfettalkohol, Alkylphenolpolyglykolether wie die Ethoxylierungsprodukte von Octyl- oder Nonylphenol, Diisopropylphenol, Triisopropylphenol oder von Di- oder Tri-tert.-butylphenol, oder Ethoxylierungsprodukte von Polypropylenoxid.

Als ionische Emulgatoren kommen in erster Linie anionische Emulgatoren in Frage. Es kann sich dabei um die Alkali- oder Ammonium-Salze von Alkyl-, Aryl- oder Alkylarylsulfonaten, -Sulfaten, -Phosphaten, -Phosphonaten oder Verbindungen mit anderen anionischen Endgruppen handeln, wobei sich auch Oligo- oder Polyethylenoxid-Einheiten zwischen dem Kohlenwasserstoffrest und der anionischen Gruppe befinden können. Typische Beispiele sind Natriumlaurylsulfat, Natriumoctylphenolpolyglykolethersulfat, Natriumdodecylbenzolsulfonat, Natriumlauryldiglykolsulfat, Ammonium-tri-tert.-butylphenolpenta- oder -oktaglykolsulfat.

Als Schutzkolloide verwendet man gegebenenfalls Naturstoffe wie Gummiarabicum, Stärke, Alginate oder modifizierte Naturstoffe wie Methyl-, Ethyl-, Hydroxyalkyl- oder Carboxymethylcellulose oder synthetische Substanzen wie Polyvinylalkohol, Polyvinylpyrrolidon oder Gemische aus derartigen Stoffen. Bevorzugt können modifizierte Cellulose-Derivate und synthetische Schutzkolloide verwendet werden.

Der Einsatz dieser Schutzkolloide ist jedoch bei Verwendung der beschriebenen Monomersysteme, wie dem Fachmann bekannt ist, nur beschränkt möglich. Die verwendbaren Mengen sind häufig gering, beispielsweise 0,001 bis 1 Gew.-%, und die Verträglichkeit sowie die Art der Zugabe muß von Fall zu Fall geprüft werden.

Zum Starten und Weiterführen der Polymerisation bedient man sich öl- und/oder vorzugsweise wasserlöslicher Radikalbildner oder Redoxsysteme. Es eigenen sich beispielsweise Wasserstoffperoxid, Kalium- oder Ammoniumperoxodisulfat, Dibenzoylperoxid, Laurylperoxid, Tri-tert.-butylperoxid, Bisazodiisobutyronitril, allein oder zusammen mit reduzierenden Komponenten, beispielsweise Natriumbisulfit, ®Rongalit (Formaldehyd-Natriumsulfoxylat, BASF), Glukose, Ascorbinsäure und anderen reduzierend wirkenden Verbindungen und gegebenenfalls Aktivatoren, beispielsweise Eisen(II)salze.

Bei Dispersionen, die im sauren Bereich hergestellt werden, ist es häufig vorteilhaft, beispielsweise zur Erhöhung der Lagerstabilität und zur Erleichterung der Farbenherstellung mit Ammoniak oder geeigneten Aminen, beispielsweise wasserlöslichen tertiären Aminen, einen pH-Wert zwischen 7,5 und 10 einzustellen.

Im folgenden wird die Erfindung anhand von Beispielen erläutert. Die in den Beispielen angegebenen Teile und Prozente beziehen sich auf das Gewicht, soweit nicht anders vermerkt.

### Vergleichsbeispiel A:

In einem Gefäß mit 1 m³ Nutzvolumen, ausgestattet mit schnell laufendem Rührwerk, wird eine Monomeremulsion hergestellt, bestehend aus

| | |
|---|---|
| 205 kg | Wasser |
| 6 kg | Ammonium-tri-tert.butylphenolpolyglykolethersulfat mit ca. 8 Ethylenoxideinheiten, |
| 8 kg | Methacrylsäure, |
| 4 kg | Acrylsäure, |
| 200 kg | 2-Ethylhexylacrylat, |
| 200 kg | Methylmethacrylat und |
| 12 kg | Acetessigsäureallylester. |

In einem Reaktionsbehälter mit 1 m³ Nutzvolumen mit Rührer, Rückflußkühler mit Vakuumanschluß und Monomervoratsgefäß wird eine Mischung aus

| | |
|---|---|
| 202 kg | Wasser, |
| 2 kg | Ammonium-tri-tert.-butylphenolpolyglykolethersulfat mit ca. 8 Ethylenoxideinheiten und |
| 40 kg | der Monomeremulsion auf 81°C |

geheizt und mit einer Lösung aus 0,3 kg Ammoniumperoxodisulfat in 10 kg Wasser versetzt. Anschließend beginnt man mit der Zudosierung der restlichen Monomeremulsion. Die Gesamtzudosierzeit beträgt 3,5 Stunden, die Polymerisationstemperatur und die Temperatur während der Nachheizzeit liegt zwischen 80 und 83°C. Der Ansatz wird versetzt mit 0,1 kg Ammoniumperoxodisulfat in 3 kg Wasser, 1 Stunde weiter geheizt und dann abgekühlt. Der pH-Wert wird mit einer 25 %igen wäßrigen Ammoniaklösung auf 9,3 eingestellt. Der Feststoffgehalt beträgt ca. 50 %.

### Beispiel 1:

In einem Gefäß mit 10 m³ Nutzvolumen, ausgestattet mit schnell laufendem Rührwerk, wird eine Monomeremulsion hergestellt, bestehend aus

| | |
|---|---|
| 2050 kg | Wasser |
| 60 kg | Ammonium-tri-tert.butylphenolpolyglykolethersulfat mit ca. 8 Ethylenoxideinheiten, |
| 80 kg | Methacrylsäure, |
| 40 kg | Acrylsäure, |
| 2000 kg | 2-Ethylhexylacrylat, |
| 2000 kg | Methylmethacrylat und |
| 120 kg | Acetessigsäureallylester. |

In einem Reaktionsbehälter mit 10 m³ Nutzvolumen mit Rührer, Rückflußkühler mit Vakuumanschluß und Monomervoratsgefäß wird eine Mischung aus

| | |
|---|---|
| 2020 kg | Wasser, |
| 20 kg | Ammonium-tri-tert.-butylphenolpolyglykolethersulfat mit ca. 8 Ethylenoxideinheiten und |
| 395 kg | der Monomeremulsion auf 81°C |

geheizt und mit einer Lösung aus 3 kg Ammoniumperoxodisulfat in 100 kg Wasser versetzt. Anschließend beginnt man mit der Zudosierung der restlichen Monomeremulsion. Gleichzeitig wird der Reaktionsbehälter vorsichtig auf ein Vakuum von 470 bis 540 hPa eingestellt. Das Kondensat, das im Rückflußkühler gebildet wird, wird über eine Mischstrecke mit der zudosierten Monomeremulsion vermischt und mit diesem in das das Reaktionsgemisch eindosiert. Die Gesamtzudosierzeit beträgt 3,5 Stunden, die Polymerisationstemperatur und die Temperatur während der Nachheizzeit liegt zwischen 80 und 83°C. Nach dem Ende der Monomer-Dosierung wird der Ansatz mit Stickstoff belüftet und damit das Vakuum aufgehoben. Der Ansatz wird versetzt mit 1 kg Ammoniumperoxodisulfat in 30 kg Wasser, 1 Stunde weiter geheizt und dann abgekühlt. Der pH-Wert wird mit einer 25 %igen wäßrigen Ammoniaklösung auf 9,3 eingestellt. Der Feststoffgehalt beträgt ca. 50 %.

### Vergleichsbeispiel 1 a

Es wird in gleicher Weise verfahren, wie in Beispiel 1 beschrieben, jedoch wird der Ansatz unter Normaldruck polymerisiert. Die Gesamtdauer der Monomer-Zudosierung beträgt 8 Stunden.

### Beispiel 2: (Vergleich)

Es wird in gleicher Weise verfahren, wie in Beispiel 1 beschrieben, jedoch wird das rückströmende Kondensat unabhängig von der Zudosierung der Monomeremulsion in den Reaktionsansatz zurückgeführt.

### Beispiel 3:

In einem Gefäß mit 10 m³ Nutzvolumens, ausgestattet mit schnell laufendem Rührwerk, wird eine Monomeremulsion hergestellt, bestehend aus

| | |
|---|---|
| 2050 kg | Wasser, |
| 40 kg | Natriumsalz von Laurylalkoholdiglykolethersulfat, |
| 30 kg | Methacrylsäure, |
| 40 kg | Acrylsäure, |
| 2000 kg | Butylacrylat und |
| 2000 kg | Styrol. |

In einem Reaktionsbehälter mit 10 m³ Nutzvolumen mit Rührer, Rückflußkühler mit Vakuumanschluß und Monomervorratsgefäß wird eine Mischung aus

| | |
|---|---|
| 2000 kg | Wasser, |
| 20 kg | Natriumsalz von Laurylalkoholdiglykolethersulfat und |
| 395 kg | der Monomeremulsion auf 80°C |

geheizt und mit einer Lösung aus 3 kg Ammoniumperoxodisulfat in 100 kg Wasser versetzt. Anschließend beginnt man mit der Zudosierung der restlichen Monomeremulsion. Gleichzeitig wird der Reaktionsbehälter vorsichtig auf ein Vakuum von 470 bis 540 hPa eingestellt. Das Kondensat, das im Rückflußkühler gebildet wird, wird über eine Mischstrecke mit der zuzudosierenden Monomeremulsion vermischt und zusammen mit dieser in das Reaktionsgemisch eindosiert. Die Gesamtzudosierzeit beträgt 3,5 Stunden, die Polymerisationstemperatur und die Temperatur während der Nachheizzeit liegt zwischen 80 und 83°C. 10 Minuten nach dem Ende der Monomer-Dosierung wird der Ansatz mit Stickstoff belüftet und damit das Vakuum aufgehoben. Man versetzt den Ansatz mit 1 kg Ammoniumperoxodisulfat in 30 kg Wasser, heizt 60 Minuten nach und kühlt dann ab. Der pH-Wert wird mit einer 25 %igen wäßrigen Ammoniak-Lösung auf 9,5 eingestellt, der Feststoffgehalt beträgt ca. 50 %.

### Vergleichsbeispiel 3 a:

Es wird in gleicher Weise verfahren, wie in Beispiel 3 beschrieben, jedoch wird der Ansatz unter Normaldruck polymerisiert. Die Gesamtdauer der Monomer-Zudosierung beträgt 8 Stunden.

Die Eigenschaften der in den Beispielen A, 1, 1a, 2, 3 und 3a, 2a hergestellten Dispersionen sind in Tabelle 1 zusammengestellt.

Von den so hergestellten Dispersionen werden die Teilchengröße, die Teilchengrößenverteilung sowie der Koagulat- und Feinstippenanteil bestimmt.
- Teilchengröße:
Die Messung der Teilchengröße kann nach bekannten Methoden erfolgen, beispielsweise elektronenmikroskopisch (G. Löhr, R. Reinecke, Angew. Makromol. Chem. **85**, 181 (1980)).
- Teilchengrößenverteilung:
Die Teilchengrößenverteilung d_{w}/dₙ ist eine Maßzahl zur Beurteilung der Einheitlichkeit von Dispersionspartikeln. Sie ist definiert als der Quotient aus dem Gewichtsmittel der Teilchendurchmesser d_{w} und ihrem Zahlenmittel dₙ. Wenn die Teilchen völlig einheitlich sind, kann der Quotient den Wert annehmen, Uneinheitlichkeiten ergeben Zahlenwerte größer als 1 (vergl. U. E. Woods et al., Journal of paint technology, Vol. 40, Nr. 527 (1968), Seite 545).
- Feinstippen:
Der Feinstippenanteil wird bestimmt, indem 500 g der Dispersion über ein 160 µm Sieb vorgesiebt werden und über ein 40 µm Sieb (mit bekanntem Gewicht) filtriert werden. Nach Trocknen des Siebes mit dem Rückstand für 2 h bei 105°C erhält man nach Abzug des Leergewichts den Feinstippenanteil, bezogen auf die eingesetzte Menge.
- K-Wert:
Der K-Wert ist ein Maß für das relative Molekulargewicht, bestimmt durch eine Viskositätsmessung von 2 g Dispersion, gelöst in 100 ml Ethylacetat bei 20 °C (vergl. G. Fikentscher, Cellulosechemie 13, 58 (1932)). Je höher der K-Wert, desto höher das Molekulargewicht.

**Tabelle 1:**

| Beisp. | Ansatzgröße [m³] | Dosierzeit [h] | Teilchengröße | | | Feinstippen [%] | K-Wert |
|---|---|---|---|---|---|---|---|
| | | | d_{w} [nm] | dₙ [nm] | d_{w}/dₙ | | |
| A | 1 | 3,5 | 139 | 132 | 1,05 | 0,0008 | 92,1 |
| 1 | 10 | 3,5 | 147 | 142 | 1.03 | 0,0009 | 91,5 |
| 1a | 10 | 8 | 139 | 135 | 1,03 | 0,0007 | 72,1 |
| 2 | 10 | 3,5 | 211 | 138 | 1,53 | 0,024 | 90,2 |
| 3 | 10 | 3,5 | 130 | 108 | 1,20 | 0,0007 | 77,4 |
| 3a | 10 | 8 | 133 | 110 | 1,22 | 0,0005 | 60,1 |

Die Ergebnisse aus Tabelle 1 zeigen deutlich den Einfluß der Polymerisationsbedingungen auf die Eigenschaften der hergestellten Dispersion. Längere Polymerisationszeiten führen zu niedrigeren Molekulargewichten.

Zum besseren Verständnis der Bedeutung der Dosierzeit auf die Dispersionseigenschaften werden weitere Ansätze im Labormaßstab hergestellt, dabei wird die Vergleichsdosierzeit von 3 über 7 auf 9 Stunden verlängert.

### Vergleichsbeispiel 4 a:

Eine Monomeremulsion wird hergestellt, bestehend aus:

| | |
|---|---|
| 310 Teilen | Wasser, |
| 6 Teilen | Natriumsalz von Laurylalkoholdiglykolethersulfat, |
| 12 Teilen | Methacrylsäure, |
| 6 Teilen | Acrylsäure, |
| 300 Teilen | Butylacrylat und |
| 300 Teilen | Styrol. |

In einem Reaktionsbehälter mit Rührer, Rückflußkühler mit Vakuumanschluß und Monomervorratsgefäß wird eine Mischung aus

| | |
|---|---|
| 303 Teilen | Wasser, |
| 3 Teilen | Natriumsalz von Laurylalkoholdiglykolethersulfat und |
| 60 Teilen | der Monomeremulsion auf 80 °C |

geheizt und mit einer Lösung aus 0,45 Teilen Ammoniumperoxodisulfat in 15 Teilen Wasser versetzt. Anschließend beginnt man mit der Zudosierung der restlichen Monomeremulsion. Die Gesamtzudosierzeit beträgt 3 Stunden, die Polymerisationstemperatur und die Temperatur während der Nachheizzeit liegt zwischen 80 und 83°C. Man versetzt den Ansatz mit 0,15 Teilen Ammoniumperoxodisulfat in 5 Teilen Wasser, heizt 60 Minuten nach und kühlt dann ab. Der pH-Wert wird mit einer 25 %igen wäßrigen Ammoniak-Lösung auf 9,5 eingestellt, der Feststoffgehalt beträgt ca. 50 %.

### Vergleichsbeispiel 4 b:

Es wird in gleicher Weise verfahren, wie in Vergleichsbeispiel 4 a beschrieben, jedoch beträgt die Gesamtzudosierzeit 7 Stunden.

### Vergleichsbeispiel 4 c:

Es wird in gleicher Weise verfahren, wie in Vergleichsbeispiel 4 a beschrieben, jedoch beträgt die Gesamtzudosierzeit 9 Stunden.

Die Eigenschaften der in den Vergleichsbeispielen 4a, 4b und 4c hergestellten Dispersionen sind in Tabelle 2 zusammengestellt.

Zur Überprüfung der anwendungstechnischen Eigenschaften wird von den in den Vergleichsbeispielen 4a bis 4c hergestellten Dispersionen das Pigmentbindevermögen bestimmt. Dazu werden die Dispersionen gemäß folgender Rezeptur zur Herstellung einer Dispersionsfarbe für innen verwendet:

| | |
|---|---|
| 285,0 Teile | Wasser, |
| 3,0 Teile | ®Additol XW 330 (Entschäumer, Vianova Kunstharz), |
| 0,5 Teile | ®Additol XW 375 (Entschäumer, Vianova Kunstharz), |
| 4,5 Teile | ®Tylose MHB 10000 Typ (Methylhydroxyethylcellulose, Hoechst), |
| 15,0 Teile | ®Calgon N, 10 %ig (Polymetaphosphat, Hoechst), |
| 40,0 Teile | ®Micro Talc AT 1 (Magnesium-Schichtsilikat, Norwegian Talc), |
| 40,0 Teile | ®China Clay B (Aluminiumsilikathydrat, ECC-International Speciality Business Group), |
| 70,0 Teile | ®Kronos 2065 Titandioxid (Kronos Titan), |
| 100, 0 Teile | ®Socal P 2 (Calciumcarbonat, Solvay Alkali), |
| 150,0 Teile | ®Omyacarb 2 GU (Calciumcarbonat, Omya), |
| 190,0 Teile | ®Omyacarb 5 GU (Calciumcarbonat, Omya), |
| 1,5 Teile | ®Mergal K 10 (Konservierungsmittel, Riedel de Häen), |
| 0,5 Teile | Ammoniak konz. (25 %ig), |
| 91,0 Teile | Dispersion (50 %ig) gemäß Beispiel 4a, 4b, 4c, |
| 12,5 Teile | Testbenzin, |
| 7,0 Teile | Butyldiglykolacetat. |

Nach 1 Tag Lagerzeit werden die so hergestellten Dispersionsfarben mit ca. 200 µm Naßfilmdicke auf "®Srub Test Panel Black Film" (Ruß-haltige PVC-Folie, The Leneta Co.) aufgezogen. Die Anstriche werden nach 7 Tagen Trocknen bei 23 °C und 50 % relativer Luftfeuchte mit dem Gardner Gerät gemäß DIN 53 778 abgebürstet. Damit wird die Zahl der Doppelbürstenstriche (DBS) nach Gardner ermittelt, denen der Anstrich standhält. Zunehmende DBS-Zahlen bedeuten zunehmende Anstrichsqualität.

**Tabelle 2:**

| Beisp. | Dosierzeit [h] | Teilchengröße | | | K-Wert | Pigmentbindevermögen [Doppelbürstenstriche] |
|---|---|---|---|---|---|---|
| | | d_{w} [nm] | dₙ [nm] | d_{w}/dₙ | | |
| 4A | 3 | 86 | 81 | 1,06 | 75,6 | 1100 |
| 4B | 7 | 90 | 83 | 1,08 | 71,3 | 750 |
| 4C | 9 | 108 | 98 | 1,1 | 64,1 | 600 |

Aus Tabelle 2 ist deutlich zu erkennen, daß durch längere Polymerisationszeiten der K-Wert deutlich abnimmt. Außerdem wird eine wichtige anwendungstechnische Eigenschaft, das Pigmentbindevermögen, durch längere Polymerisationszeiten negativ beeinflußt.

## Patentansprüche

1. Verfahren zur Herstellung von Emulsionspolymerisaten aus
A) 20 bis 80 Gew.-% hartmachenden Monomeren aus der Gruppe Methylmethacrylat, Styrol und Vinyltoluol,
B) 20 bis 80 Gew.-% weichmachenden Monomeren aus der Gruppe Acrylsäureester und Methacrylsäureester, die im Alkoholrest einen linearen oder verzweigten Alklyrest mit 2 bis 8 Kohlenstoffatomen tragen,
C) 0,1 bis 5 Gew.-% Comonomeren aus der Gruppe Acrylsäure, Methacrylsäure, Acrylamid, Methacrylamid, N-Methylolacrylamid, N-Methylolmethacrylamid, Hydroxyethylacrylat, Hydroxyethylmethacrylat, Hydroxypropylacrylat, Hydroxypropylmethacrylat, Glycidylacrylat und Glycidylmethacrylat,
D) 0 bis 20 Gew.-% weiteren damit copolymerisierbare Monomeren
in Rührreaktoren mit 2 bis 80 m³ Nutzvolumen nach dem Zudosierverfahren mittels einer Monomer-Voremulsion mit einer Zugabegeschwindigkeit der Monomere von 15 bis 60 Gew.-% der Gesamtmenge der zuzuführenden Monomere pro Stunde durch Polymerisation und Destillation eines Wasser-/Monomer-Gemisches unter reduziertem Druck und Rückführung des durch Kühlung kondensierten Wasser-/Monomer-Gemisches nach intensivem Vermischen mit der dem Polymerisationsansatz zugeführten Monomer-Voremulsion.

2. Verfahren nach Anspruch 1, dadurch gekennzeichnet, daß die Emulsionspolymerisation in einem Temperaturbereich zwischen 55 und 90 °C bei einem Druck zwischen 120 und 700 hPa durchgeführt wird.

3. Verfahren nach Anspruch 1, dadurch gekennzeichnet, daß 3 - 98 Gew.% der zur Herstellung der Emulsionspolymerisate eingesetzten Emulgatormenge während der Polymerisation zusammen mit den Monomeren über die Monomer-Voremulsion eingesetzt werden.

4. Verfahren nach Anspruch 1, dadurch gekennzeichnet, daß das vom Kühler ablaufende Kondensat kontinuierlich zusammen mit der Monomer-Voremulsion über eine Mischstrecke in den Polymerisationsansatz zurückgeführt wird.

5. Verfahren nach Anspruch 1, dadurch gekennzeichnet, daß das Verfahren während der Monomer-Zudosierung isotherm durchgeführt wird.

## Claims

1. A process for preparing emulsion polymers comprising
A) from 20 to 80% by weight of rigidity-inducing monomers selected from the group consisting of methyl methacrylate, styrene and vinyltoluene,
B) from 20 to 80% by weight of plasticizing monomers selected from the group consisting of acrylic esters and methacrylic esters which bear, in the alcohol radical, a linear or branched alkyl radical having from 2 to 8 carbon atoms,
C) from 0.1 to 5% by weight of comonomers selected from the group consisting of acrylic acid, methacrylic acid, acrylamide, methacrylamide, N-methylolacrylamide, N-methylolmethacrylamide, hydroxyethyl acrylate, hydroxyethyl methacrylate, hydroxypropyl acrylate, hydroxypropyl methacrylate, glycidyl acrylate and glycidyl methacrylate,
D) from 0 to 20% by weight of further monomers copolymerizable therewith
in stirred reactors having a utilizable volume of from 2 to 80 m³ by the metered-addition process by means of a monomer preemulsion using a metering-in rate of the monomers of from 15 to 60% by weight of the total amount of the monomers to be fed in per hour by polymerization and distillation of a water/monomer mixture under reduced pressure and recirculation of the water/monomer mixture condensed by cooling after intensive mixing with the monomer preemulsion fed into the polymerization batch.

2. The process as claimed in claim 1, wherein the emulsion polymerization is carried out in a temperature range between 55 and 90°C at a pressure between 120 and 700 hPa.

3. The process as claimed in claim 1, wherein 3-98% by weight of the amount of emulsifier used for preparing the emulsion polymers are added during the polymerization together with the monomers via the monomer preemulsion.

4. The process as claimed in claim 1, wherein the condensate flowing from the condenser is continuously recirculated into the polymerization batch together with the monomer preemulsion via a mixing section.

5. The process as claimed in claim 1, wherein the process is carried out isothermally during the metered addition of monomer.

## Revendications

1. Procédé de préparation de polymères en émulsion à partir de
A) de 20 à 80 % en poids de monomères durcisseurs pris dans le groupe comportant le méthacrylate de méthyle, le styrène et le vinyltoluène,
B) de 20 à 80 % en poids de monomères plastifiants pris dans le groupe comportant des acrylates et des méthacrylates, qui portent dans le reste alcool un reste alkyle linéaire ou ramifié avec 2 à 8 atomes de carbone,
C) de 0,1 à 5 % en poids de comonomères pris dans le groupe comportant l'acide acrylique, l'acide méthacrylique, l'acrylamide, le méthacrylamide, le N-méthylolacrylamide, le N-méthylolméthacrylamide, l'acrylate d'hydroxyéthyle, le méthacrylate d'hydroxyéthyle, l'acrylate d'hydroxypropyle, le méthacrylate d'hydroxypropyle, l'acrylate de glycidyle et le méthacrylate de glycidyle,
D de 0 à 20 % en poids d'autres monomères copolymérisables avec les précédents,
dans des réacteurs agités avec un volume utile de 2 à 80 m³, selon le procédé d'addition progressive d'une pré-émulsion de monomères avec une vitesse d'addition des monomères de 15 à 60 % en poids de la quantité totale des monomères à alimenter par heure, par polymérisation et par distillation d'un mélange eau/monomère sous pression réduite et par recyclage du mélange eau/monomère condensé par refroidissement après mélange intense avec la pré-émulsion de monomères qui alimente la charge de polymérisation.

2. Procédé selon la revendication 1, caractérisé en ce que l'on met en oeuvre la polymérisation en émulsion à une température comprise entre 55 et 90 °C, sous une pression comprise entre 120 et 700 hPa.

3. Procédé selon la revendication 1, caractérisé en ce que l'on utilise pour préparer des polymères en émulsion de 3 à 98 % en poids de la quantité d'émulsionnant utilisée dans la polymérisation conjointement avec les monomères dans la pré-émulsion de monomères.

4. Procédé selon la revendication 1, caractérisé en ce que l'on recycle en continu à la charge de polymérisation le condensat s'écoulant du condenseur conjointement avec la pré-émulsion de monomères, en passant par une section de mélange.

5. Procédé selon la revendication 1, caractérisé en ce que l'on met en oeuvre le procédé de façon isotherme au cours de l'addition progressive des monomères.
